(19) Europäisches Patentamt
European Patent Office
Office européen des brevets

(11) **EP 3 628 496 A1**

(12) **EUROPÄISCHE PATENTANMELDUNG**

(43) Veröffentlichungstag:
**01.04.2020 Patentblatt 2020/14**

(51) Int Cl.:
**B41J 2/175** *(2006.01)* **B41J 2/015** *(2006.01)*
**B41J 2/18** *(2006.01)*

(21) Anmeldenummer: **19195024.5**

(22) Anmeldetag: **03.09.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **26.09.2018 DE 102018216412**

(71) Anmelder: **Heidelberger Druckmaschinen AG**
**69115 Heidelberg (DE)**

(72) Erfinder:
• **Fischer, Jörg-Achim**
**24235 Laboe (DE)**
• **Norrick, Dr. Nicklas**
**68542 Heddesheim (DE)**

(54) **VERFAHREN ZUM DRUCKEN EINES BILDES MIT FLÜSSIGER TINTE**

(57) Die Erfindung betrifft ein Verfahren zum Drucken eines Bildes mit flüssiger Tinte, wobei die Tinte mittels einer Pumpe (7) zu einem Druckkopf (4) gepumpt wird und Zeilen (13, 14) des Bildes mittels des Druckkopfs auf einen bewegten Bedruckstoff (5) gedruckt werden, und zeichnet sich dadurch aus, dass für mehrere einzelne Zeilen (13, 14) oder für mehrere gruppierte Zeilen (13, 14) des Bildes (9, 10) jeweils ein zum Tintenbedarf für die Zeilen korrelierender Wert ($A_i$, 22) berechnet wird und die Pumpe (7) wird mit einem auf den berechneten Werten basierenden Vorsteuersignal vorgesteuert wird. Die Erfindung ermöglicht in vorteilhafter Weise, die Druckqualität weiter zu erhöhen.

Fig.1

EP 3 628 496 A1

**Beschreibung**

Die Erfindung betrifft ein Verfahren zum Drucken eines Bildes mit flüssiger Tinte mit den Merkmalen von Anspruch 1.

Technisches Gebiet und Stand der Technik

Die Erfindung liegt auf dem technischen Gebiet der grafischen Industrie und dort insbesondere im Bereich des industriellen Tintendrucks (Inkjet) auf flache Substrate, d.h. des Auftragens von flüssiger Tinte auf Bedruckstoff.

Das Auftragen flüssiger Tinte erfolgt bei dem bekannten DOD-Tintendruckverfahren (drop-on-demand), indem ein Druckbild auf einem flachen Bedruckstoff erzeugt wird, wobei ein Tintendruckkopf (kurz: Kopf) mit einzeln ansteuerbaren Düsen dem zu druckenden Bild entsprechend feinste Tintentropfen, bevorzugt im Pikoliter-Bereich, erzeugt und diese berührungslos als Druckpunkte auf den Bedruckstoff überträgt. Das Ansteuern der Düsen kann mittels Piezoaktoren erfolgen.

Beim Inkjet-Drucken mit zirkulierender Tintenversorgung werden Druckköpfe mit flüssiger Tinte versorgt, wobei üblicherweise wenigstens eine Pumpe zum Einsatz kommt. Dabei entspricht die Differenz des (hohen) Tintenvolumenstroms im Hinlauf zum Kopf und des (niedrigen) Tintenvolumenstroms im Rücklauf vom Kopf dem vom Kopf verdruckten Tintenvolumen.

Schlagartige Wechsel des Druckbilds können zu ebenfalls schlagartigen Änderungen des verdruckten Tintenvolumens führen und dabei kann es aufgrund von Totzeiten der Pumpe zu unerwünschtem Druckabfall in der Tintenversorgung und Beeinträchtigungen der Druckqualität kommen.

Eine bekannte Maßnahme besteht darin, ausreichende hydraulische Kapazitäten zur Stabilisierung des Drucks in der flüssigen Tinte an geeigneten Stellen zu verbauen. Dies erfordert jedoch zusätzlichen Bauraum.

Eine weitere bekannte Maßnahme ist es, die Pumpe mit einem vom Druckbild-Wechsel abhängigen Vorsteuersignal zu beaufschlagen, damit die Pumpe einem zu erwartenden Druckabfall rechtzeitig durch entsprechenden Druckaufbau kompensierend entgegenwirken kann.

Aufgabe

Es ist eine Aufgabe der vorliegenden Erfindung, ein gegenüber dem Stand der Technik verbessertes Verfahren zu schaffen, welches es insbesondere ermöglicht, die Druckqualität weiter zu erhöhen.

Erfindungsgemäße Lösung

Diese Aufgabe wird erfindungsgemäß durch ein Verfahren mit der Merkmalskombination von Anspruch 1 gelöst. Vorteilhafte und daher bevorzugte Weiterbildungen der Erfindung ergeben sich aus den Unteransprüchen sowie aus der Beschreibung und den Zeichnungen. Die Merkmale der Erfindung, der Weiterbildungen der Erfindung und der Ausführungsbeispiele zur Erfindung stellen auch in Kombination miteinander vorteilhafte Weiterbildungen der Erfindung dar.

Die Erfindung betrifft ein Verfahren zum Drucken eines Bildes mit flüssiger Tinte, wobei die Tinte mittels einer Pumpe zu einem Druckkopf gepumpt wird und Zeilen des Druckbildes mittels des Druckkopfs auf einen bewegten Bedruckstoff bedruckt werden, und zeichnet sich dadurch aus, dass für mehrere Zeilen oder für mehrere gruppierte Zeilen des Bildes jeweils ein zum Tintenbedarf für die Zeilen korrelierender Wert berechnet wird und dass die Pumpe mit einem auf den berechneten Werten basierenden Vorsteuersignal vorgesteuert wird.

Die Erfindung ermöglicht es in vorteilhafter Weise, die Druckqualität weiter zu erhöhen.

Ein besonderer Vorteil der Erfindung kann darin gesehen werden, dass nicht nur wechselnde Druckbilder hinsichtlich des wechselnden Flüssigkeitsdrucks in der Tinte vorgesteuert werden können, sondern dass auch schwankende Tintenverbräuche innerhalb eines Druckbilds, bis hin zu zeilenabhängigen Schwankungen, erfasst und per Vorsteuerung derart kompensiert werden können, dass mit erheblich verbesserter Druckqualität produziert werden kann.

Erfindungsgemäß können stetige und unstetige Schwankungen vorgesteuert und hierdurch kompensiert werden.

Die für das Vorsteuern erforderlichen Werte können vorab rechentechnisch erzeugt und speichertechnisch zur Verwendung bereitgestellt werden oder sie können aktuell ("on the fly") erzeugt und verwendet werden.

"Bedruckstoff" meint flache Substrate, welche unbedruckt und für das Bedrucken vorgesehen sind oder bereits bedruckt und für das weitere Bedrucken und ggf. weitere Verarbeiten, insbesondere Falzen, vorgesehen sind. "Bedruckstoff" meint insbesondere flache Substrate in Form von Bogen oder Bahnen im Wesentlichen aus den Materialien Papier, Karton, Pappe, Wellpappe, Kunststoff oder Metall, insbesondere Kunststofffolie oder Metallfolie, oder in Form von Etiketten im Wesentlichen aus den Materialien Papier oder Kunststoff, insbesondere auf einer Träger-Bahn, oder in Form von Bahnen im Wesentlichen aus den Materialien Naturfaser oder Kunstfaser, insbesondere Textil-Bahnen wie z.B. Gewebe-Bahnen. Der Bedruckstoff wird bevorzugt für den Akzidenz-, Etiketten- und/oder Verpackungsdruck verwendet.

Weiterbildungen der Erfindung

Bevorzugte Weiterbildungen der Erfindung können sich durch eine oder mehrere der nachfolgend aufgelisteten Merkmalskombinationen auszeichnen:

- Beim Berechnen kann eine zum Bild korrespondierende Matrix verwendet werden, welche Zeilen mit Einträgen von Tropfengrößen umfasst und es können Zeilensummen gebildet werden.
- Die Tropfengrößen können mit zugehörigem, vorgegebenem Tintentropfvolumen gewichtet werden.
- Es kann eine Verzögerungszeit zwischen dem Zeitpunkt für das Übermitteln des Vorsteuersignals an die Pumpe und dem Zeitpunkt für das Übermitteln eines Steuersignals an den Druckkopf berechnet werden.
- Die Verzögerungszeit kann in Abhängigkeit einer konstanten oder variablen Bedruckstoff-Transportgeschwindigkeit berechnet werden.
- Die Verzögerungszeit kann durch das Drucken und Auswerten eines Testelements optimiert werden.
- Die Pumpe kann einen Flüssigkeitsdruck in der Tinte erzeugen.
- Es können zwei, drei, vier oder fünf Zeilen gruppiert werden.

Figuren und Ausführungsbeispiele zur Erfindung

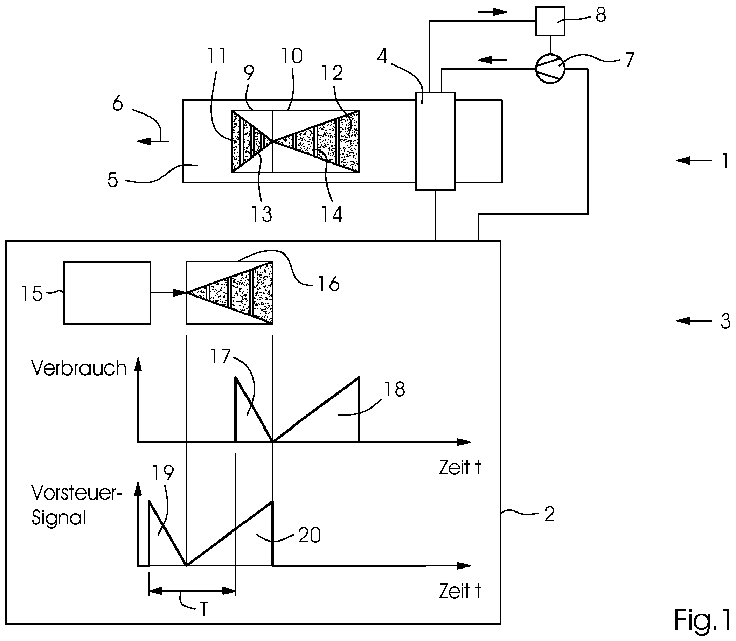

Die Erfindung und deren bevorzugte Weiterbildungen werden nachfolgend unter Bezug auf die Zeichnungen, d.h. die Figuren 1 bis 6, anhand wenigstens eines bevorzugten Ausführungsbeispiels näher beschrieben. Einander entsprechende Merkmale sind dabei mit denselben Bezugszeichen versehen.

| | |
|---|---|
| Figur 1: | System zur Durchführung des erfindungsgemäßen Verfahrens; |
| Figur 2A: | gespeicherte digitale Daten und Werteberechnung; |
| Figur 2B: | gespeicherte digitale Daten und Werte-Berechnung; |
| Figuren 3 und 4: | Ausführungsbeispiele der Erfindung mit zeitlicher Verzögerung; |
| Figur 5: | Diagramme zum Ermitteln und Optimieren der Verzögerungszeit; und |
| Figur 6: | Ausführungsbeispiele der Erfindung mit optimierter zeitlicher Verzögerung. |

Figur 1 zeigt eine Tintendruckmaschine 1 und einen digitalen Rechner 2, welche gemeinsam ein System 3 bilden, welches die Durchführung einer bevorzugten Ausführungsform des erfindungsgemäßen Verfahrens ermöglicht.

Die Tintendruckmaschine 1 umfasst einen Tintendruckkopf 4 zum digitalen Bedrucken eines bewegten Bedruckstoffs 5. Der Druckkopf ist bevorzugt seitenbreit, d.h. wenigstens so breit wie der Bedruckstoff, und kann eine Vielzahl benachbarter ("gestitchter") Einzelköpfe aufweisen. Jeder Einzelkopf ist bevorzugt ein sogenannter DOD-Druckkopf ("Drop on demand") zum Verdrucken flüssiger Tinte. Der Bedruckstoff wird in eine Richtung 6 bewegt bzw. transportiert und kann bevorzugt Papier, Karton, Pappe oder Kunststofffolie (jeweils als Bogen oder als Bahn) sein. Alternativ können Objekte bzw. deren (beliebig geformte) Oberflächen bedruckt werden.

Die Tintendruckmaschine 1 umfasst eine Tintenpumpe 7 und einen Tintenbehälter 8, welche gemeinsam und zusammen mit Tintenleitungen eine Einrichtung zur bevorzugt zirkulierenden Tintenversorgung bilden. Die Tintenpumpe pumpt die flüssige Tinte vom Behälter zum Druckkopf (Hinlauf). Es kann zusätzlich eine Rücklaufpumpe zwischen Druckkopf und Tintenbehälter vorhanden sein.

Der Druckkopf 4 und die Tintenpumpe 7 werden vom Rechner 2 angesteuert, was über die dargestellten Steuerleitungen oder drahtlos erfolgen kann.

In Figur 1 ist erkennbar, dass auf dem Bedruckstoff 5 Druckbilder 9 und 10 erzeugt wurden. Beispielhaft weisen das Druckbild 9 einen Farbkeil 11 und das Druckbild 10 einen Farbkeil 12 auf. Jeder Farbkeil umfasst gedruckte Zeilen (senkrecht zur Richtung 6), von denen nur einige dargestellt sind: Zeilen 13 des Bildes 9 und Zeilen 14 des Bildes 10. Es können auch aufeinanderfolgende Zeilen (bevorzugt bis zu fünf) gruppiert werden (als Zeilengruppen 13 und Zeilengruppen 14).

Der Rechner 2 weist einen Bildspeicher 15 auf, in dem Druckdaten der Druckbilder 9 und 10 digital gespeichert sind. Der Rechner weist auch einen Zwischenspeicher 16 auf, in den die digitalen Druckbilder 9 und 10 geladen werden können. Alternativ ist der Zwischenspeicher ein Bereich des Bildspeichers. Ebenfalls alternativ können die digitalen Druckbilder bzw. deren Druckdaten einem seriellen Datenstrom entnommen werden. Die digitalen Druckbilder bzw. deren Druckdaten werden vom Rechner an den Druckkopf 4 übermittelt.

Der Zwischenspeicher dient der rechnergestützten Berechnung eines sogenannten Vorsteuersignals als Korrektursignal. Die Pumpe 7 wird vom Rechner 2 vorgesteuert, wobei das Vorsteuersignal zum Einsatz kommt. Zwischen der Übermittlung des Vorsteuersignals vom Rechner an die Pumpe und dem Übermitteln der Druckdaten an den Druckkopf bzw. dem Drucken wird eine sogenannte Verzögerungszeit T eingehalten. Bei dem Vorsteuersignal handelt es sich um ein hochaufgelöstes Vorsteuersignal, welches bevorzugt zeilenweise Änderungen des zum Drucken benötigten Tintenvolumens berücksichtigt.

Im Zwischenspeicher 16 sind im gezeigten Beispiel Druckdaten des Druckbilds 10 geladen. Unterhalb des Zwischenspeichers sind zwei Diagramme dargestellt, die Berechnungen des Rechners 2 verdeutlichen sollen.

Das obere Diagramm zeigt den aktuellen Tintenverbrauch am Druckkopf 4 (hier ist die Amplitude des Verbrauchs über der Zeit t aufgetragen): die erste Verbrauchsspitze 17 korrespondiert zum zuerst gedruckten Druckbild 9 und die zweite Verbrauchsspitze 18 zum danach gedruckten Druckbild 10, wobei sich die Spitzen aus dem beispielhaften keilförmigen Aufbau der Druckbilder ergeben. Solche Spitzen würden zu extremen Druckänderungen in der bereitgestellten flüssigen Tinte und infolgedessen zu Qualitätseinbußen beim Drucken führen. Die Erfindung schafft hier Abhilfe.

Das untere Diagramm zeigt die vom Rechner 2 aus den digitalen Druckdaten der Druckbilder 9 und 10 errechneten ersten und zweiten Vorsteuersignale 19 und 20 für die jeweiligen Druckbilder. Die Vorsteuersignale liegen auf der Zeitachse erkennbar um eine vorgegebene oder ebenfalls errechnete Verzögerungszeit T vor den Verbrauchsspitzen. Um die Vorsteuersignale für die Druckbilder 9 und 10 hochaufgelöst zu errechnen, werden die Druckbilder entsprechend ihrer Zeilen 13 und 14 vom Rechner 12 analysiert.

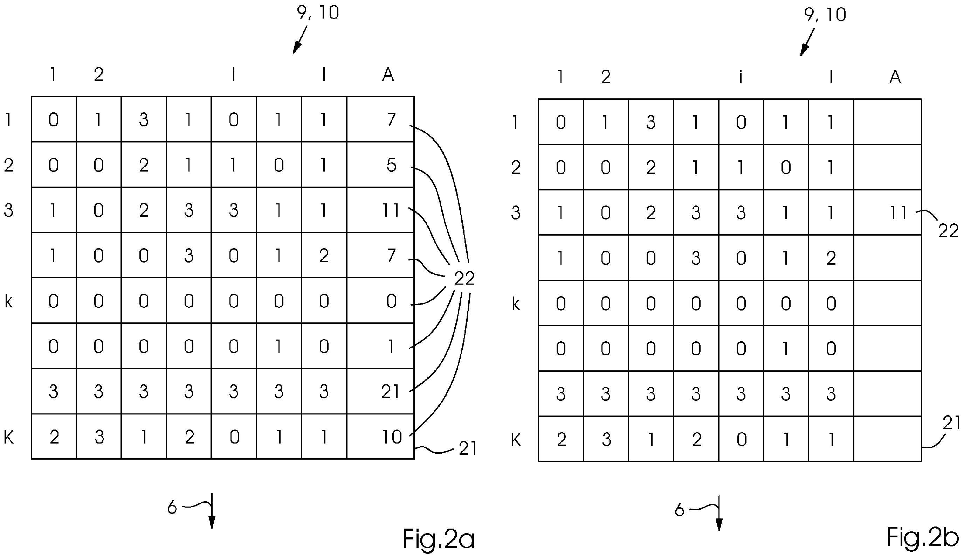

Figur 2A und Figur 2B zeigen jeweils einen Ausschnitt eines Druckbildes 9 oder 10 bzw. dessen digitale Druckdaten in Form jeweils einer im Rechner 2 gespeicherten Matrix 21. Dabei gilt Folgendes:

- i ist die Nummer der Zeile (zwischen 1 und I);
- k ist die Nummer der Spalte (zwischen 1 und K);
- der Matrix-Eintrag n bei (i, k) ist die Tropfengröße;
- der zusätzliche Spaltenvektor A enthält als Einträge $A_i$ die jeweilige Zeilensumme der Tropfengrößen, welche zum Tintenbedarf für das Drucken der Zeile korreliert.

Die Beispiele der Figuren 2A und 2B beruhen auf den Tropfengrößen 0, 1, 2 und 3 (kein Tropfen, kleiner Tropfen, mittlerer Tropfen, großer Tropfen). Die Tropfengrößen 0 bis 3 können dabei das jeweilige Tintenvolumen des Tropfens wiedergeben, das heißt z.B., dass ein Zweier-Tropfen doppelt so viel Tinte aufweist wie ein Einser-Tropfen.

Die Einträge $A_i$ bzw. die entsprechenden Werte 22 stehen nach deren Berechnung als zeilenweise Vorsteuersignale für die Pumpe 7 zur Verfügung. Alternativ werden die Werte 22 vor dem Vorsteuern zunächst weiter rechentechnisch verarbeitet bzw. in passende Werte umgerechnet. Im Beispiel der Figur 2A werden mehrere Zeilen oder bevorzugt alle Zeilen vorab summiert und die erhaltenen Werte 22 (bzw. $A_i$) für das spätere Vorsteuern bereitgehalten. Im Alternativbeispiel der Figur 2B wird nur je eine Zeile summiert und der Wert 22 zeitnah für das Vorsteuern verwendet. Sodann erfolgt das Summieren der nächsten Zeile.

Bei der Berechnung der Werte 22 kann auch eine Gewichtung erfolgen, z.B. derart: Tropfengröße 0 entspricht 0 Pikoliter, 1 entspricht 3 Pikoliter, 2 entspricht 5 Pikoliter und 3 entspricht 7 Pikoliter. Der Wert $A_3$ in Figur 2B wäre dem Beispiel entsprechend gewichtet somit 28 (Pikoliter). Es sind auch andere Pikoliterwerte möglich.

Für das Vorsteuern bzw. das Erzeugen der Amplitude des Vorsteuersignals werden bevorzugt die Zeilensummen $A_i$ an einen D/A-Wandler übertragen, der einen D/A-Wandlerwert erzeugt. Dieser wird mit einem Faktor versehen, der den Druckstrom/Druckpuls und den Pumpenfluss beinhaltet. Der Endwert wird bevorzugt als Vorsteuersignal zur Regelspannung der Pumpe (oder der Pumpen) im zirkulierenden Tintenversorgungssystem 7 und 8 addiert. Das Vorsteuersignal wird bevorzugt mit dem Drucktakt getaktet.

Die Druckdaten werden bevorzugt gegenüber dem Startzeitpunkt des Vorsteuersignals verzögert bzw. das Verzögerungssignal wird mit dem Drucktakt und einem Schieberegister oder Zähler erzeugt. Das Verzögern wird bevorzugt mit einer konstanten Größe erzeugt (Frequenz oder andere Zeit bestimmende, stabile Größe mit einem Schieberegister oder Zähler).

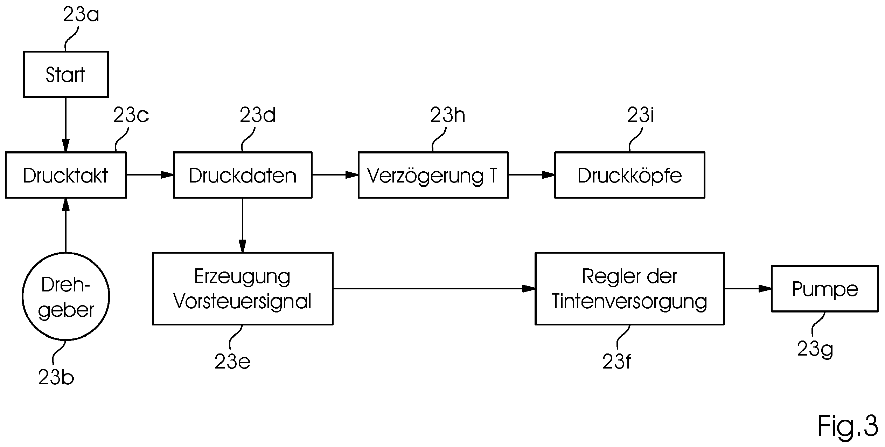

Die Figuren 3 bis 5 zeigen Ausführungsbeispiele der Erfindung für unterschiedliche Systeme 3 mit unterschiedlichen Anforderungen an die Zeitverzögerung zwischen dem Vorsteuern und Drucken.

Bei allen drei Beispielen werden die Vorsteuersignale derart erzeugt, dass diese bereitstehen und an die Pumpe 7 bzw. deren Steuerung übermittelt werden können, noch bevor die Druckköpfe 4 mit den zu den Vorsteuersignalen korrespondierenden Daten angesteuert werden.

Druckdaten, welche erst extrem kurzfristig zur Verfügung stehen, z.B. variable Daten, wie Uhrzeit des Drucks, können bei der Vorsteuerung, auch bei der erfindungsgemäß hochauflösenden Vorsteuerung, nicht berücksichtigt werden. Solche Daten können z.B. mit bekannten (Mittel-)werten vorgesteuert werden, z.B. 50 % des Tintenvolumenstroms. Solche Daten sollten keinen zu großen Bereich des Druckbildes einnehmen.

Figur 3 zeigt eine erfindungsgemäße Vorsteuerung für ein System 3 mit konstanter Druckgeschwindigkeit mit den Verfahrensschritten 23a bis 23i.

Das Verfahren beginnt mit Start (Schritt 23a). Ein, in Figur 1 nicht dargestellter, Drehgeber der Druckmaschine 1 gibt Signale (Schritt 23b), aus denen ein Drucktakt bestimmt werden kann (Schritt 23c). Die Druckdaten 9 oder 10 stehen bereit (Schritt 23d). Aus diesen wird erfindungsgemäß ein Vorsteuersignal $A_i$ bzw. 22 berechnet (Schritt 23e), welches an einen Regler der Tintenversorgung 7, 8 übermittelt wird (Schritt 23f). Der Regler regelt die Pumpe 7 (Schritt 23g). Es wird die Verzögerung T berechnet (Schritt 23h) und die Druckdaten werden unter Achtung der Verzögerung an die Druckköpfe 4 übermittelt (Schritt 23i).

Konkretes Beispiel: Die Druckdaten liegen zu Beginn in einem Speichermedium 15 oder 16 vor. Die Druckposition auf dem Bedruckstoff 5 ist bestimmt. Durch in der Druckmaschine 1 vorgesehene Drehgeber sind die Orte, der Druckstart und andere Positionen (teilweise relativ) bevorzugt bestimmt. Eine konstante Zeitspanne, hier die Verzögerung T der Druckdaten von einem fiktiven Zeitpunkt bzw. Ort ist einfach umsetzbar. Bei konstanter Geschwindigkeit sind Ort und Zeitinkremente gleichwertig. Von einer vorgelagerten (fiktiven oder tatsächlich gedruckten) Startmarke können Verzögerungszeiten ohne weitere Probleme eingestellt werden. Legt man die vorgelagerte Startmarke beispielsweise 500 mm vor die Druckposition 9 oder 10, so können bei Druckgeschwindigkeiten von 0,5 m/s dann bis zu 1000 ms Verzögerungen (variabel) realisiert werden. Die Verzögerung T kann z.B. in Form von Schieberegisterdaten des Spaltenvektors A des Vorsteuersignals gestaltet sein und liegt zeitlich vor den Druckdaten 9 oder 10 bereit, damit die notwendige Verzögerung realisiert werden kann. Der Spaltenvektor A des Vorsteuersignals muss mindestens ein Element 22 enthalten. Dieses Element kann dann aber synchron mit der Druckgeschwindigkeit in ein Vorsteuersignal gewandelt werden. Es wird bevorzugt rechtzeitig erzeugt, damit die o.g. Verzögerung T eingestellt werden kann. Die Verzögerung T kann im einfachsten Fall eine Zahl im Register sein, die mit dem Drucktakt heruntergezählt wird und die Druckfreigabe (das Drucken der Druckköpfe mit den Druckdaten) startet. Bei der Erstellung eines Vektors A mit mehr als einem Element 22 zur Erzeugung des Vorsteuersignals kann der Prozess der Erstellung und des Heraustaktens entkoppelt werden. Hierfür gibt es bekannte Methoden auf die zurückgegriffen werden kann, z.B. zwei Register, die wechselseitig geladen werden und wechselseitig heraus getaktet werden. Der ortsbezogene Drucktakt, der beispielsweise aus einem ortsbezogenen Drehgebersignal gewonnen wird, kann somit auch als Takt zur Generierung der Verzögerungszeit T benutzt werden. Voraussetzung dafür ist, dass zum Zeitpunkt des Erzeugens des Vorsteuersignals die Druckgeschwindigkeit bereits erreicht worden ist.

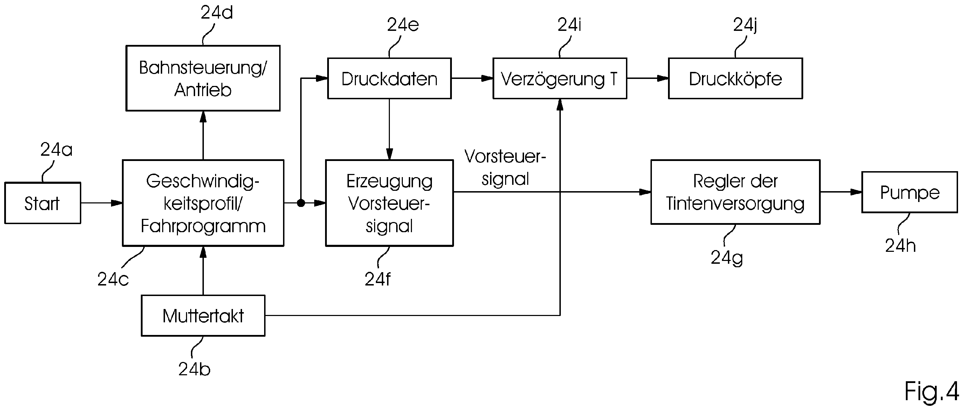

Figur 4 zeigt eine erfindungsgemäße Vorsteuerung für ein System 3 mit variabler Druckgeschwindigkeit mit den Verfahrensschritten 24a bis 24j.

Eine variable Geschwindigkeit kann z.B. beim Hochfahren oder Anhalten der Druckmaschine 1 (Beschleunigen bzw. Verzögern des Bedruckstoffs 5) vorliegen. Dabei kann die Geschwindigkeit (und somit die Beschleunigung) bekannt, z.B. vom Rechner vorgegeben sein oder über Sensoren, z.B. Drehgeber, ermittelt und im Rechner 2 bereitgestellt werden.

Das Vorsteuersignal kann z.B. aus dem sogenannten Farbprofil der Druckmaschine 1 konstruiert werden.

Das Verfahren beginnt mit Start (Schritt 24a). Es wird ein (Mutter-) Takt vorgegeben (Schritt 24b). Es wird ein Geschwindigkeitsprofil oder ein Fahrprogramm für die Druckmaschine 1 vorgegeben oder bestimmt (Schritt 24c). Davon ausgehend wird der Antrieb für den Bedruckstofftransport gesteuert (Schritt 24d). Die Druckdaten 9 oder 10 stehen bereit (Schritt 24e). Aus diesen wird (unter Berücksichtigung des Geschwindigkeitsprofil oder des Fahrprogramms) erfindungsgemäß ein Vorsteuersignal $A_i$ bzw. 22 berechnet (Schritt 24f), welches an einen Regler der Tintenversorgung 7, 8 übermittelt wird (Schritt 24g). Der Regler regelt die Pumpe 7 (Schritt 24h). Es wird die Verzögerung T berechnet (Schritt 24i), wobei der (Mutter-) Takt berücksichtigt wird, und die Druckdaten werden unter Achtung der Verzögerung an die Druckköpfe 4 übermittelt (Schritt 24j).

Konkretes Beispiel: Wenn sich die Druckgeschwindigkeit ändert, muss die Verzögerungszeit T bevorzugt erhalten bleiben. Eine direkte Ableitung der Verzögerungszeit aus dem Drucktakt und damit aus einem Drehgebersignal ist somit nicht möglich. Die Takte für den Druck sind letztlich "ortssynchrone" Takte, die notwendige Verzögerung ist aber eine zeitliche Konstante. Deshalb wird folgendes vorgeschlagen: Bei einer nichtkonstanten Druckgeschwindigkeit wird bevorzugt ein Geschwindigkeitsprofil zum Drucken festgelegt. Aus diesem Geschwindigkeitsprofil wird bevorzugt ein Drucktakt abgeleitet (v_Drucken (t) => Drucktakt(t)). Dies ist eine feste Funktion. Damit ist die Ortbeziehung der Druckdaten festgelegt. Aus der dann vorliegenden Drucktaktfunktion wird bevorzugt eine Vorsteuerfunktion erzeugt, die zeitlich vor der Drucktaktfunktion abläuft. Der zeitliche Versatz ist die o.g. Verzögerung T: Vorsteuersignal (t) => Drucktakt (t+T). Einen Drehgeber (zum Zweck der Taktbildung) gibt es in diesem Fall nicht. Die Bahngeschwindigkeit folgt bevorzugt einer Steuerung.

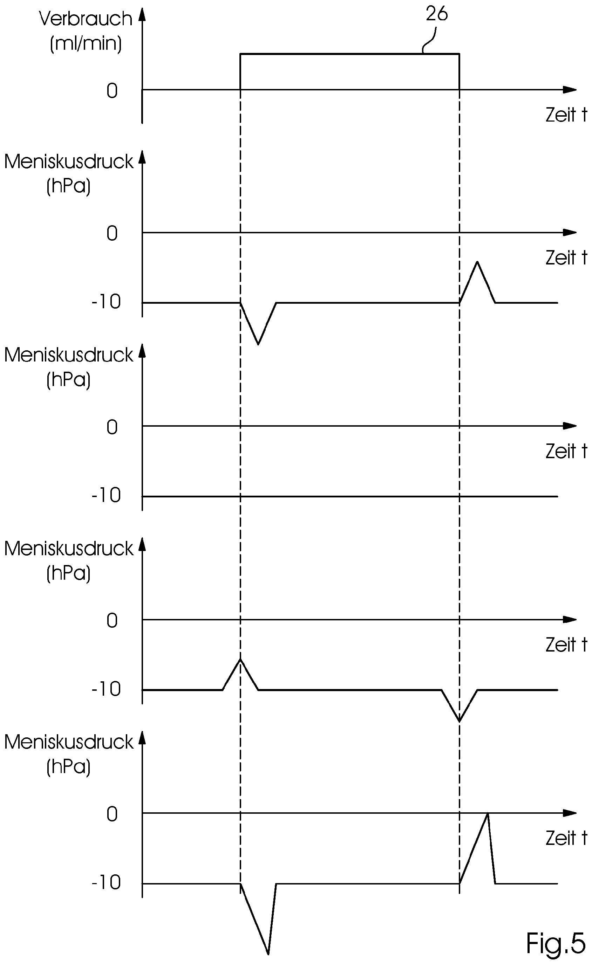

Figur 5 zeigt fünf Diagramme, um zu verdeutlichen, wie die Verzögerungszeit T zwischen dem Vorsteuern der Pumpe 7 und dem Ansteuern des Druckkopfs 4 ermittelt und gegebenenfalls optimiert werden kann.

Die Diagramme zeigen (von oben nach unten): Das Drucken eines Testelements (z.B. eines Druckstreifens) bzw. den dabei anfallenden Tintenverbrauch (Tintenstrom); den Meniskusdruck (Druck in der flüssigen Tinte an den Düsenöffnungen des Druckkopfs) ohne Vorsteuerung mit Druckspitzen bei Beginn und Ende des Tintenstroms; den Meniskusdruck bei optimierter Vorsteuerung; den Meniskusdruck bei verfrühter Vorsteuerung und den Meniskusdruck bei verspäteter Vorsteuerung.

Konkretes Beispiel: Wie bereits oben beschrieben, soll die Verzögerungszeit relativ genau angepasst sein, um die Korrektur wirksam durchzuführen. Durch eine im Folgenden beschriebene Optimierungsprozedur ist dies möglich. Dazu wird z.B. ein Bild mit einem Optimierungs-Druckstreifen gedruckt. Die Verzögerungszeit T wird beim Drucken z.B. von einem Minimalwert bis zu einem Maximalwert variiert. Parallel dazu wird das Drucksignal ausgewertet. Eine optimale Verzögerungszeit ist dann eingestellt, wenn die Druckabweichung minimal ist. Bei einem Testdruck sind die genauen Zeitpunkte der Druckpulse und des Tintenstroms (Bildanfang bzw. Bildende) bekannt. Durch Integration der Druckpulssignale um die Zeitpunkte der Tintenstromänderungen und der Abtastung des dann integrierten Signals, erhält man Signale, die entweder negativer oder positiver als der Meniskusdruck sind. Aus der Richtungsänderung kann man auf die Wirkung der Verzögerung schließen. Die Richtung kehrt sich mit der Änderung des Tintenstroms (am Druckstreifenende) um. Dadurch lässt sich die Verzögerungszeit T eindeutig einstellen. Es lässt sich eine Kennlinie konstruieren: Signal = f (T). Wenn das Signal zu Null wird, ist die Verzögerung optimal eingestellt. Der (Optimierungs-) Druckstreifen kann in einen sonst üblichen Druckkontrollstreifen integriert sein. Folgendes kann vorgesehen sein: Optimierung der Verzögerungszeit durch den Druckstreifen und durch Auswertung des Drucksignals an vorhandenen Drucksensoren; Bestimmung der optimalen Verzögerung durch minimale Druckabweichung zu Beginn des Druckens; Bestimmung der optimalen Verzögerung durch minimale Druckabweichung am Ende des Druckens; Abspeicherung der Verzögerungszeiten als Defaultwerte zum Starten der Optimierung; Dynamische Regelung der Verzögerung beim Drucken durch ständiges Aufsuchen des absoluten Minimums (Overshoot/ Undershoot der Druckpulse); und/oder Abschalten der Regelung (Optimierung) der Verzögerung beim Drucken, wenn die Druckstromschwankung unterhalb einer definierten Schwelle liegt. Das Verfahren kann dabei vollständig automatisiert ablaufen.

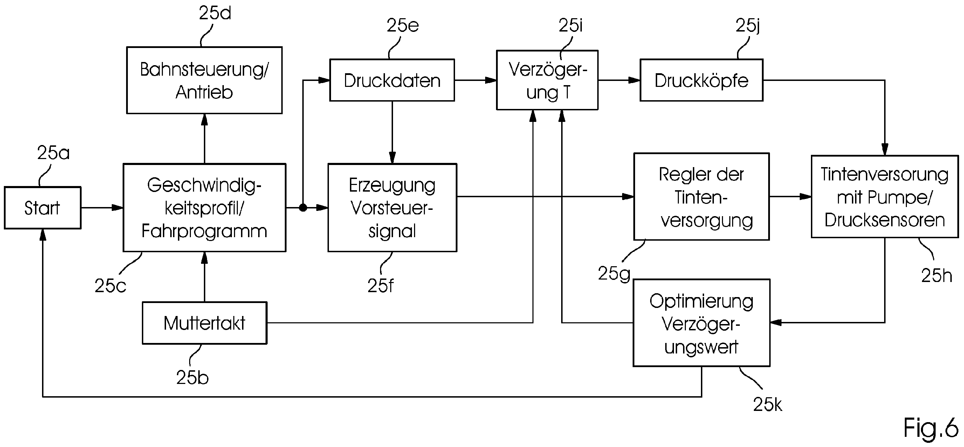

Figur 6 zeigt eine erfindungsgemäße Vorsteuerung für ein System 3 mit einer Optimierung der Verzögerungszeit während des Druckens, z.B. wegen einer unerwünschten Drift der Verzögerungszeit, mit den Verfahrensschritten 25a bis 25k.

Das Verfahren beginnt mit Start (Schritt 25a). Es wird ein (Mutter-) Takt vorgegeben (Schritt 25b). Es wird ein Geschwindigkeitsprofil oder ein Fahrprogramm für die Druckmaschine 1vorgegeben oder bestimmt (Schritt 25c). Davon ausgehend wird der Antrieb für den Bedruckstofftransport gesteuert (Schritt 25d). Die Druckdaten 9 oder 10 stehen bereit (Schritt 25e). Aus diesen wird (unter Berücksichtigung des Geschwindigkeitsprofil oder des Fahrprogramms) erfindungsgemäß ein Vorsteuersignal $A_i$ bzw. 22 berechnet (Schritt 25f), welches an einen Regler der Tintenversorgung 7, 8 übermittelt wird (Schritt 25g). Der Regler regelt die Pumpe 7 (Schritt 25h). Es wird die Verzögerung T berechnet (Schritt 25i), wobei der (Mutter-) Takt und das Ergebnis einer Optimierung (Schritt 25k) berücksichtigt wird, und die Druckdaten werden unter Achtung der Verzögerung an die Druckköpfe 4 übermittelt (Schritt 25j). Die Optimierung greift auf Daten aus Schritt 25h (von Sensoren bereitgestellt) zurück.

Konkretes Beispiel: Wenn die einmal eingestellte Verzögerung T aufgrund von so genannten Drifts nicht mehr optimal ist, entstehen Signalabweichungen (Meniskusschwankungen). Dies wäre ein Anzeichen für die Notwendigkeit einer Korrektur der Verzögerungszeit T. Dazu würde der obige Prozess erneut eingeleitet werden. Eine direkte Änderung der Verzögerung T während des Druckens ist aber auch denkbar. Dazu sind allerdings einige Kompromisse einzugehen und ein geringer Restfehler muss unter Umständen zugelassen werden. So kann sich beispielsweise in einer Phase, in der nicht gedruckt wird, ein Fehler aufbauen, der nicht unmittelbar nach Einsetzen des Druckens beseitigt werden kann. Die Änderung der Verzögerung T (der so genannten Drift) darf sich zeitlich nicht schneller ändern als die Verzögerung T selbst. Ein mögliche Lösung kann sein: Die Meniskusdruckabweichung Delta_pm zum Idealwert Null dient zur Berechnung des Korrekturwertes Delta_T, wobei T_neu = T_alt + Delta_T und Delta_T= Delta_pm * F. Der Faktor F ist ein empirisch ermittelter Faktor mit der Einheit s/hPa (das Vorzeichen des Faktors F hängt von der Tintenstromänderungsrichtung ab). Aus dem zu druckenden Bild werden bevorzugt spezielle Abtastpunkte rechentechnisch herausgearbeitet, an denen die Korrektur vorgenommen wird: 1) Dies sind idealerweise große Tintenstromänderungen; 2) Die Änderungen sollten idealerweise von gleicher Größe sein; 3) Die Änderungen sollten idealerweise oft erscheinen; 4) Aus Figur 5 ist erkennbar, dass an den positiven und negativen Flanken der Druckstromänderung die Wirksamkeit der Verzögerung bewertet werden kann. Die Änderungsrichtung (positiv) oder (negativ) ist für die Bewertung entscheidend; 5) Hilfsweise können beide Änderungsrichtungen ausgenutzt werden, so dass eine größere Wahrscheinlichkeit besteht, Korrekturdaten zu erhalten; 6) Hilfsweise können mehrere Gruppen von Änderungen innerhalb einer zeitlichen Phase unterschiedlicher Größe gebildet werden, die insgesamt einen Korrekturwert bilden. Aus mehreren Korrekturwerten kann dann der zeitlich nächste Wert benutzt werden.

Idealerweise ist für die Vorsteuerung die Übertragungsfunktion der Regelstrecke mit $G_s(s)$ als Funktion bekannt. Das Übertragungsverhalten $G_{vs}(s)$ der Vorsteuerung entspricht optimaler Weise dem Reziprokwert der Übertragungsfunktion der Regelstrecke:

$$G_{VS}(s) = \frac{1}{G_s(s)}$$

Die Gewichtung findet dabei im Frequenzbereich statt, d.h. wenn die Tintenpumpen nicht ausreichend dynamisch reagieren, funktionieren sie wie ein Tiefpassfilter. Bei Kenntnis dieser Filtercharakteristik kann das Vorsteuersignal im Frequenzbereich mit der inversen Filtercharakteristik verzerrt werden, sodass dann ein optimales Signal an die Pumpen geschickt wird. Ist das Streckenverhalten im Frequenzbereich nicht bekannt, muss mindestens eine Skalierung des Vorsteuersignals stattfinden, die das Tintenstromsignal (Einheit: ml/min) in eine Meniskusdruckabweichung (Einheit: mbar) übersetzt.

**Bezugszeichenliste**

| | |
|---|---|
| 1 | Tintendruckmaschine |
| 2 | digitaler Rechner |
| 3 | System |
| 4 | Tintendruckkopf |
| 5 | Bedruckstoff |
| 6 | Transportrichtung |
| 7 | Tintenpumpe |
| 8 | Tintenbehälter |

| 9 | Druckbild |
|---|---|
| 10 | Druckbild |
| 11 | Farbkeil |
| 12 | Farbkeil |
| 13 | Zeilen |
| 14 | Zeilen |
| 15 | Bildspeicher |
| 16 | Zwischenspeicher |
| 17 | erste Verbrauchsspitze |
| 18 | zweite Verbrauchsspitze |
| 19 | erstes Vorsteuersignal |
| 20 | zweites Vorsteuersignal |
| 21 | Matrix |
| 22 | Werte |
| 23a bis 23i | Verfahrensschritte |
| 24a bis 24j | Verfahrensschritte |
| 25a bis 25k | Verfahrensschritte |
| 26 | Testelement |

$A_i$    Werte
T    Verzögerungszeit

**Patentansprüche**

1.  Verfahren zum Drucken eines Bildes mit flüssiger Tinte, wobei die Tinte mittels einer Pumpe (7) zu einem Druckkopf (4) gepumpt wird und Zeilen (13, 14) des Bildes mittels des Druckkopfs auf einen bewegten Bedruckstoff (5) gedruckt werden,
    **dadurch gekennzeichnet,**
    **dass** für mehrere einzelne Zeilen (13, 14) oder für mehrere gruppierte Zeilen (13, 14) des Bildes (9, 10) jeweils ein zum Tintenbedarf für die Zeilen korrelierender Wert ($A_i$, 22) berechnet wird und dass die Pumpe (7) mit einem auf den berechneten Werten basierenden Vorsteuersignal vorgesteuert wird.

2.  Verfahren nach Anspruch 1,
    **dadurch gekennzeichnet,**
    **dass** beim Berechnen eine zum Bild (9, 10) korrespondierende Matrix (21) verwendet wird, welche Zeilen mit Einträgen von Tropfengrößen umfasst und dass Zeilensummen gebildet werden.

3.  Verfahren nach Anspruch 2,
    **dadurch gekennzeichnet,**
    **dass** die Tropfengrößen mit zugehörigen, vorgegebenen Tintentropfenvolumen gewichtet werden.

4.  Verfahren nach einem der vorhergehenden Ansprüche,
    **dadurch gekennzeichnet,**
    **dass** eine Verzögerungszeit (T) zwischen dem Zeitpunkt für das Übermitteln des Vorsteuersignals an die Pumpe (7) und dem Zeitpunkt für das Übermitteln eines Steuersignals an den Druckkopf (4) berechnet wird.

5.  Verfahren nach Anspruch 4,
    **dadurch gekennzeichnet,**
    **dass** die Verzögerungszeit (T) in Abhängigkeit einer konstanten oder variablen Bedruckstoff-Transportgeschwindigkeit berechnet wird.

6.  Verfahren nach einem der vorhergehenden Ansprüche,
    **dadurch gekennzeichnet,**
    **dass** die Verzögerungszeit (T) durch das Drucken und Auswerten eines Testelements (26) optimiert wird.

7.  Verfahren nach einem der vorhergehenden Ansprüche,
    **dadurch gekennzeichnet,**
    **dass** die Pumpe (7) einen Flüssigkeitsdruck in der Tinte erzeugt.

8.  Verfahren nach einem der vorhergehenden Ansprüche,
    **dadurch gekennzeichnet,**
    **dass** zwei, drei, vier oder fünf Zeilen (13, 14) gruppiert werden.

EP 3 628 496 A1

**9, 10**

| | 1 | 2 | | i | | I | A |
|---|---|---|---|---|---|---|---|
| 1 | 0 | 1 | 3 | 1 | 0 | 1 | 1 | 7 |
| 2 | 0 | 0 | 2 | 1 | 1 | 0 | 1 | 5 |
| 3 | 1 | 0 | 2 | 3 | 3 | 1 | 1 | 11 |
| | 1 | 0 | 0 | 3 | 0 | 1 | 2 | 7 |
| k | 0 | 0 | 0 | 0 | 0 | 0 | 0 | 0 |
| | 0 | 0 | 0 | 0 | 0 | 1 | 0 | 1 |
| | 3 | 3 | 3 | 3 | 3 | 3 | 3 | 21 |
| K | 2 | 3 | 1 | 2 | 0 | 1 | 1 | 10 |

22, 21, 6

Fig.2a

**9, 10**

| | 1 | 2 | | i | | I | A |
|---|---|---|---|---|---|---|---|
| 1 | 0 | 1 | 3 | 1 | 0 | 1 | 1 | |
| 2 | 0 | 0 | 2 | 1 | 1 | 0 | 1 | |
| 3 | 1 | 0 | 2 | 3 | 3 | 1 | 1 | 11 |
| | 1 | 0 | 0 | 3 | 0 | 1 | 2 | |
| k | 0 | 0 | 0 | 0 | 0 | 0 | 0 | |
| | 0 | 0 | 0 | 0 | 0 | 1 | 0 | |
| | 3 | 3 | 3 | 3 | 3 | 3 | 3 | |
| K | 2 | 3 | 1 | 2 | 0 | 1 | 1 | |

22, 21, 6

Fig.2b

Fig.3

Start — 24a

Geschwindig-keitsprofil/Fahrprogramm — 24c

Muttertakt — 24b

Bahnsteuerung/Antrieb — 24d

Druckdaten — 24e

Erzeugung Vorsteuer-signal — 24f

Vorsteuer-signal

Verzögerung T — 24i

Druckköpfe — 24j

Regler der Tintenversorgung — 24g

Pumpe — 24h

Fig.4

Fig.5

Fig.6

- Tintenversorgung mit Pumpe/Drucksensoren — 25h
- Druckköpfe — 25j
- Regler der Tinten-versorgung — 25g
- Optimierung Verzöger-ungswert — 25k
- Verzöger-ung T — 25i
- Druckdaten — 25e
- Erzeugung Vorsteuer-signal — 25f
- Bahnsteuerung/ Antrieb — 25d
- Geschwindig-keitsprofil/ Fahrprogramm — 25c
- Muttertakt — 25b
- Start — 25a

Europäisches Patentamt

European Patent Office

Office européen des brevets

# EUROPÄISCHER RECHERCHENBERICHT

Nummer der Anmeldung

EP 19 19 5024

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 7 841 706 B2 (CANON FINETECH INC [JP]) 30. November 2010 (2010-11-30) | 1-5,7,8 | INV. B41J2/175 B41J2/015 B41J2/18 |
| Y | * Spalte 16, Zeile 22 - Spalte 17, Zeile 56 * | 6 | |
| | ----- | | |
| X | US 2006/215000 A1 (KACHI YASUHIKO [JP]) 28. September 2006 (2006-09-28) | 1-5,7,8 | |
| Y | * Anspruch 1 * | 6 | |
| | ----- | | |
| Y | US 2008/007587 A1 (WATANABE MASARU [JP]) 10. Januar 2008 (2008-01-10) * Absatz [0132] * | 6 | |
| | ----- | | |

RECHERCHIERTE SACHGEBIETE (IPC)

B41J

Der vorliegende Recherchenbericht wurde für alle Patentansprüche erstellt

| Recherchenort | Abschlußdatum der Recherche | Prüfer |
|---|---|---|
| Den Haag | 19. Februar 2020 | Joosting, Thetmar |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 19 5024

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-02-2020

| Im Recherchenbericht angeführtes Patentdokument | Datum der Veröffentlichung | Mitglied(er) der Patentfamilie | Datum der Veröffentlichung |
|---|---|---|---|
| US 7841706 B2 | 30-11-2010 | US 2008273046 A1<br>WO 2005118300 A1 | 06-11-2008<br>15-12-2005 |
| US 2006215000 A1 | 28-09-2006 | JP 4085100 B2<br>JP 2006272627 A<br>US 2006215000 A1 | 30-04-2008<br>12-10-2006<br>28-09-2006 |
| US 2008007587 A1 | 10-01-2008 | JP 2008012847 A<br>US 2008007587 A1 | 24-01-2008<br>10-01-2008 |

EPO FORM P0461

Für nähere Einzelheiten zu diesem Anhang : siehe Amtsblatt des Europäischen Patentamts, Nr.12/82